# EUROPEAN PATENT SPECIFICATION

(11) **EP 4 679 533 B1**
(45) Date of publication and mention of the grant of the patent: **09.12.2026**
(21) Application number: 25186273.6
(22) Date of filing: 30.06.2025
(51) Int. Cl.: H01M 10/052, C01B 25/45, H01M 10/54, H01M 4/58

(54) **DIRECT RECYCLING METHOD, POWER BATTERY FOR VEHICLE, AND VEHICLE**
DIREKTRECYCLINGVERFAHREN, STROMBATTERIE FÜR FAHRZEUG UND FAHRZEUG
PROCÉDÉ DE RECYCLAGE DIRECT, BATTERIE D'ALIMENTATION POUR VÉHICULE ET VÉHICULE

(30) Priority: 02.07.2024 CN 202410880514
(43) Date of publication of application: 14.01.2026
(73) Proprietor: Volvo Car Corporation, 405 31 Göteborg (SE)
(72) Inventor: LEI, Jie, Shanghai, 201815 (CN); XIAO, Tie, Shanghai, 201815 (CN); ZHOU, Ye, Shanghai, 201815 (CN); CHEN, Yingzhu, Shanghai, 201815 (CN); XU, Zhihan, Shanghai, 201815 (CN)
(74) Representative: Kransell & Wennborg KB

(56) References cited:
- CN-A- 102 208 707
- CN-A- 118 073 697
- US-A1- 20230 420 760

## Description

### TECHNICAL FIELD

The present application relates to the technical field of lithium iron phosphate batteries, and in particular to a direct recycling method for lithium iron phosphate, a power battery for a vehicle, and a vehicle.

### BACKGROUND

As the global demand for lithium-ion batteries continues to grow, millions of tons of spent lithium-ion batteries are expected to be generated in the next few years. The lithium-ion batteries include lithium iron phosphate (LiFePO₄) batteries that are favored for their excellent thermal stability, outstanding cycle life and relatively low cost, and occupy a significant share of the lithium-ion battery market. The lithium iron phosphate batteries are widely used in electric vehicles, energy storage systems and other fields, playing an important role in promoting the clean energy revolution and reducing carbon emissions.

With the large-scale application of the lithium iron phosphate batteries, the recycling and reuse of the spent lithium iron phosphate batteries has become increasingly prominent. Efficient recycling of the spent lithium iron phosphate batteries can not only recover valuable metal resources and reduce the pressure on the exploitation of natural resources, but also reduce energy consumption and environmental pollution. However, the existing recycling process of the spent lithium iron phosphate batteries is complex and energy-intensive, involving multiple steps such as smelting, acid leaching, and chemical precipitation. It is not only costly, but also produces a large amount of greenhouse gases and secondary waste, bringing additional burdens to the environment.

Therefore, developing an efficient and environmentally friendly method for recycling the spent lithium iron phosphate batteries has become a hot topic of current research. Such a method can reduce energy consumption, reduce the use of chemicals, and minimize waste generation. Some examples are provided in US 2023/420760 A1, CN 102 208 707 A and CN 118 073 697 A.

US 2023/420760 A1 relates to a method for regeneration of spent cathode material of lithium-ion batteries, which involves lithiating the cathode material in a relithiation solution including a reducing agent at a temperature in the range of 60°C to 180°C for a sufficient time to heal composition defects in the cathode material. The lithiated material is then sintered to completely recover the properties. The relithiation solution may be a Li-ion source combined with nature-based organic reducing agent such as citric acid, ascorbic acid, tartaric acid, or similar.

CN 102 208 707 A relates to a method for the repair and regeneration of spent lithium iron phosphate battery cathode material. The method utilizes a lithium source solution or suspension to react with recycled spent lithium iron phosphate battery material via hydrothermal or solvent thermal reaction to produce lithium iron phosphate, or by ball milling and calcining the recycled spent lithium iron phosphate battery material with a lithium source solid phase, directly repairing lithium-deficient spent lithium iron phosphate via liquid or solid phase lithium supplementation.

CN 118 073 697 A relates to a method for recycling lithium iron phosphate battery cathode material based on hydrothermal oxidation. The method includes mixing the cathode material to be recycled with an oxidant and a weakly acidic solution, performing hydrothermal oxidation, and then separating the solid and liquid phases to obtain lithium iron phosphate solid product and lithium-containing filtrate. The filtrate is further processed via electrolysis and hydrothermal synthesis to regenerate lithium iron phosphate material.

As an emerging lithium iron phosphate battery recycling technology, the direct recycling method has shown significant advantages over traditional pyrometallurgical method and hydrometallurgical method. The direct recycling method does not require long-term high-temperature calcination, avoiding the problems of high energy consumption and severe environmental pollution. At the same time, the direct recycling method does not require the use of a large amount of acid and alkali reagents, thereby reducing the generation of chemical wastewater and the difficulty of subsequent treatment. This low-cost, low-energy green lithium iron phosphate battery recycling technology not only improves the recycling efficiency, but also reduces the negative impact on the environment. It opens up a new way for the recycling and reuse of the spent lithium iron phosphate batteries and helps promote the sustainable development of the lithium-ion battery industry.

### SUMMARY

The object of the present invention is to provide an improved direct recycling method for lithium iron phosphate, a power battery for a vehicle and a vehicle.

According to one aspect of the present application, there is provided a direct recycling method for lithium iron phosphate, comprising: immersing a cathode strip of a spent battery into deionized water, the cathode strip comprising a current collector and a coating bonded to the current collector, the coating comprising lithium iron phosphate; mechanically separating the lithium iron phosphate in the coating from the current collector; drying and grinding the separated lithium iron phosphate to obtain powder of the lithium iron phosphate; stirring deionized water with a lithium source and a pure sulfurous acid solution to form a mixture solution; stirring the mixture solution added with the powder of the lithium iron phosphate to form a suspension; heating the suspension to 90 °C - 140 °C for 4 - 8 hours to allow the lithium iron phosphate in the suspension to be regenerated by a hydrothermal reaction; washing and drying the regenerated lithium iron phosphate; and calcining the regenerated lithium iron phosphate under an atmosphere of inert gas.

According to the invention, the direct recycling method further comprises the following features: the molar concentration of the lithium source in the deionized water is 0.33 mol/L - 0.46 mol/L; the volume ratio of the pure sulfurous acid solution to the deionized water is 21 % - 29.3 %; and the liquid-to-solid ratio of the mixture solution to the powder of the lithium iron phosphate is 35 mL/g - 40 mL/g.

Optionally, the suspension is heated to one of 90 °C - 130 °C, 90 °C - 120 °C, 90 °C - 110 °C, 90 °C - 100 °C for 4 - 8 hours, preferably 4 - 6 hours, to allow the lithium iron phosphate in the suspension to be regenerated by the hydrothermal reaction.

Optionally, the regenerated lithium iron phosphate is calcined at a temperature of 650 °C - 850 °C for 2 - 6 hours under the atmosphere of inert gas.

Optionally, the direct recycling method further comprises stirring the regenerated lithium iron phosphate added with lithium carbonate powder to fully mixed them after washing and drying the regenerated lithium iron phosphate and before calcining the regenerated lithium iron phosphate under an atmosphere of inert gas, the mass of the lithium carbonate powder being 4 % of the mass of the regenerated lithium iron phosphate.

Optionally, the direct recycling method further comprises immersing the cathode strip into the deionized water at a temperature of 95 °C - 99 °C for 10 - 60 seconds, preferably 10 - 20 seconds.

Optionally, the lithium source is lithium hydroxide, and the mass ratio of lithium hydroxide to the pure sulfurous acid solution is 1:6.5 - 1:7.5.

Optionally, the direct recycling method further comprises at least one of the following features: drying the separated lithium iron phosphate under vacuum at a temperature of 80 °C for 12 hours and then grinding the separated lithium iron phosphate to obtain powder of the lithium iron phosphate; washing the regenerated lithium iron phosphate at least once with the deionized water at a speed of 8000 rpm for 8 minutes and then drying the regenerated lithium iron phosphate at a temperature of 80 °C for 12 hours; stirring the mixture solution for 5-10 minutes and maintain the pH value of the mixture solution at 6-8; and stirring the suspension at a speed of 100 rpm for 5-10 minutes.

According to another aspect of the present application, there is provided a power battery for a vehicle, the power battery comprising a cathode strip comprising lithium iron phosphate prepared by the direct recycling method.

According to another aspect of the present application, there is provided a vehicle comprising such a power battery.

The lithium iron phosphate is regenerated through the hydrothermal reaction in the direct recycling method of the present application. Unlike a solid-phase reaction, the hydrothermal reaction does not require predetermination of a lithium loss in the lithium iron phosphate separated from the cathode strip of the spent battery, and a more uniform lithium replenishment process is created in the deionized water. More importantly, the pure phase lithium iron phosphate is obtained by the direct recycling method in the present application by using the lithium source and using the sulfurous acid as a reducing agent at a minimum temperature of 90 °C, achieving a recovery rate of up to 92.5 % and hence significantly improving the economic benefits of recycling the lithium iron phosphate. Additionally, the lattice of the lithium iron phosphate is reformed by the high-temperature calcination following the hydrothermal reaction, reducing trivalent irons (Fe³⁺) that occupy lithium vacancies and repairing the crystal structure of the lithium iron phosphate. The present application processes spent lithium iron phosphate batteries at a lower cost, contributes to sustainable development and environmental protection, and is conducive to the development of power batteries including the lithium iron phosphate batteries and vehicles comprising such power batteries.

Other features and advantages of the present application will become apparent from the following detailed description of exemplary embodiments of the present application with reference to the accompanying drawings. Further features of the application and advantages thereof are provided in the following detailed description of exemplary embodiments according to the application with reference to the attached drawings.

### BRIEF DESCRIPTION OF THE DRAWINGS

The attached drawings, which are incorporated in and constitute a part of the specification, illustrate the embodiments of the present disclosure and, together with the description thereof, serve to explain the principles of the present disclosure.
FIG. 1 is a flow chart of a direct recycling method for lithium iron phosphate according to one embodiment of the present application.
FIG. 2 is a schematic diagram of a direct recycling system for lithium iron phosphate according to one embodiment of the present application.
FIG. 3 is a graph reflecting an electrochemical performance of regenerated lithium iron phosphate through Experiment 1.
FIG. 4 shows XRD patterns of spent lithium iron phosphate (S-LFP) and the regenerated lithium iron phosphate through Experiments 1 and 2 along with PDF cards of LiFePO₄ phase and FePO₄ phase.

### DETAILED DESCRIPTION

Various exemplary embodiments of the present disclosure will now be described in detail with reference to the drawings. It should be noted that the relative arrangement of the components and steps, the numerical expressions, and numerical values set forth in these embodiments do not limit the scope of the present disclosure unless it is specifically stated otherwise.

Techniques, methods and apparatus as known by one of ordinary skill in the relevant art may not be discussed in detail but are intended to be part of the specification where appropriate.

The following description of one or more exemplary embodiments is merely illustrative in nature and is not intended to limit the present disclosure, its application, or uses. Therefore, other exemplary embodiments may have different values, structures, or features.

It should be noted that the same reference numerals and letters refer to the same items in the subsequent figures, and thus once an item is defined in one figure, it may not be further discussed for the subsequent figures.

A spent lithium iron phosphate battery is no longer suitable as a power source for a vehicle, for example. The present application provides a direct recycling method to efficiently recycle and reuse lithium iron phosphate in the spent lithium iron phosphate battery.

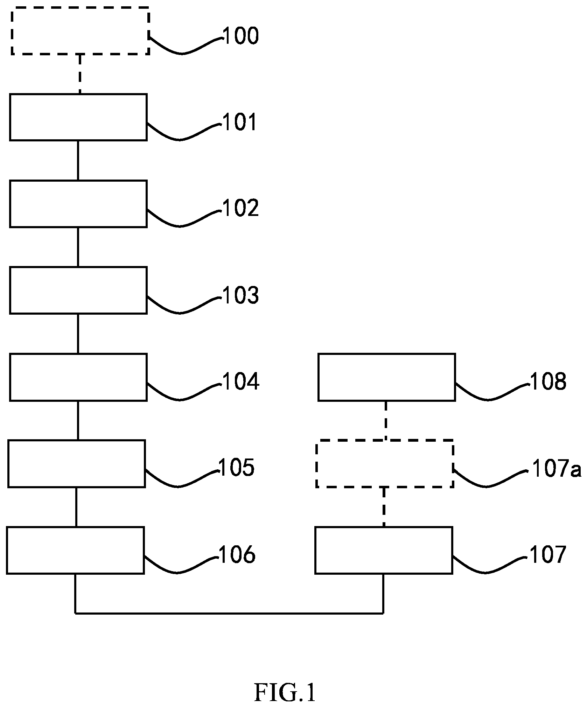

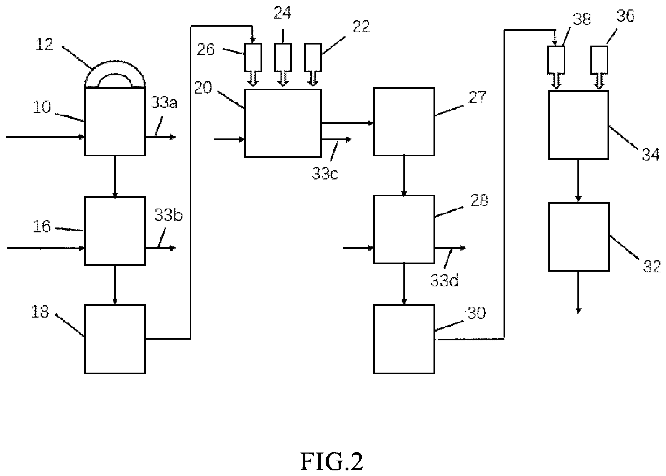

Generally, the spent lithium iron phosphate battery comprises a cathode strip or sheet having a current collector (e.g., aluminum foil) and a coating (e.g., a membrane) bonded to the current collector by a binder (e.g., PVDF) with a bonding force, the coating comprising the lithium iron phosphate. As shown in FIG. 1 and FIG. 2, the cathode strip is immersed in deionized water in Step 101. For example, the spent lithium iron phosphate battery is disassembled to gain the cathode strip therein. Then, the cathode strip is cut into a certain size and shape to expose the coating and to be clamped by a clamping fixture 12. The cathode strip is maintained at a predetermined immersion depth in the deionized water, such as in an upper part of the deionized water, by the clamping fixture 12. The deionized water is contained in a vessel 10, which can be operated to heat the deionized water to a temperature of 95 °C - 99 °C for a short period of time, for example, 10 - 60 seconds, preferably 10 - 20 seconds, or even preferably 10 seconds. The deionized water heated to a temperature of 95 °C - 99 °C has a corrosive effect on the lithium iron phosphate and induces phase separation of the binder, resulting in degradation of its adhesive properties. Thus, the bonding force would be significantly reduced.

As the lithium iron phosphate exhibits partial ionic dissolution in the deionized water, the immersion time in Step 101 must be controlled to prevent excessive lithium iron phosphate loss into the deionized water. In Step 102, the coating is mechanically separated from the current collector. For example, the clamping fixture 12 can vibrate to apply an external force to the cathode strip. Additionally or alternatively, an additional stripping tool (not shown) can be used to strip the coating from the current collector of the cathode strip. Thus, it takes a relatively short time to mechanically separate the coating from the current collector of the cathode strip immersed in the hot deionized water, which is efficient and less expensive.

In Step 103, the separated lithium iron phosphate is collected, dried and ground to obtain powder of the lithium iron phosphate. For example, the separated lithium iron phosphate in the form of bulks is vacuum-dried in a first vacuum drying oven 16 at a temperature of, for example, 80°C for, for example, 12 hours, and then ground in a grinding device 18 to form powder of the lithium iron phosphate.

In Step 104, stirring deionized water contained in a first mixing vessel 20 after adding a lithium source from a first dispenser 22 and a pure sulfurous acid (H₂SO₃) solution from a second dispenser 24 into the first mixing vessel 20, such that a mixture solution is formed. The lithium source can be configured as at least one of lithium hydroxide (LiOH) and lithium sulfate, especially lithium hydroxide, for replenishing lithium ions (Li⁺) to the powder of the lithium iron phosphate in which a lithium loss occurs. The pure sulfurous acid solution is used as a reducing agent to reduce trivalent irons (Fe³⁺) occupying Li⁺ positions (or lithium vacancies) in the powder of the lithium iron phosphate to divalent irons (Fe²⁺), such that the Fe²⁺ migrate back to their original positions, which is more conducive for the replenished Li⁺ to migrate to the lithium vacancies.

The lithium source in the deionized water has a molar concentration in the range of 0.33 mol/L - 0.46 mol/L.

The volume ratio of the pure sulfurous acid solution to the deionized water is in the range of 21 % - 29.3 %. For example, the first mixing vessel 20 is a magnetic mixing vessel 20, which stirs the mixture solution at a speed of 300 rpm for, for example, 5-10 minutes after the lithium source and the pure sulfurous acid solution are added into the deionized water, in order to fully dissolve the lithium source and the pure sulfurous acid solution in the deionized water. The pH value of the mixture solution is maintained at 6 - 8. For example, a first pH value of the mixture solution can be measured and recorded by a pH measuring instrument (not shown, for example, a pH test paper) during and/or right after a first time of stirring the mixture solution, and an amount of the lithium hydroxide or the pure sulfurous acid solution to be added to the mixture solution during a second time of stirring the mixture solution can be determined based on the first pH value with the aid of, for example, a computer. Thus, the pH value of the mixture solution is adjusted with the aim of providing a safe pH environment for the material structure of the first mixing vessel 20, for example. However, it should still be noted that the molar concentration of the lithium source in the deionized water is maintained between 0.33 mol/L and 0.46 mol/L, and the volume ratio of the pure sulfurous acid solution to the deionized water is maintained between 21 % and 29.3 %, and compatible with the above conditions, the mass ratio of the lithium hydroxide to the pure sulfurous acid solution is in the range of 1:6.5 to 1:7.5.

In Step 105, stirring the mixture solution after the powder of the lithium iron phosphate is added into the deionized water from a third dispenser 26, such that a suspension is formed. The liquid-to-solid ratio of the mixture solution to the powder of the lithium iron phosphate is in the range of 35 mL/g - 40 mL/g, such that the mixture solution can provide a uniform liquid phase environment for the powder of the lithium iron phosphate. Thus, the powder of the lithium iron phosphate is fully contacted with the Li⁺ and the sulfurous acid. For example, the first mixing vessel 20 stirs the suspension at a speed of 300 rpm for, for example, 5-10 minutes to make the powder of the lithium iron phosphate uniformly dispersed in the suspension.

Then in Step 106, the suspension is immediately transported to the hydrothermal autoclave 27, which can be operated to heat the suspension to 90 °C - 140 °C, preferably 90 °C - 130 °C, preferably 90 °C - 120 °C, preferably 90°C - 110°C, preferably 90 °C - 00 °C, even preferably about 90 °C for, for example, 4 - 8 hours, preferably 4 - 7 hours, preferably 4 - 6 hours, even preferably about 6 hours, such that the powder of the lithium iron phosphate is regenerated in the suspension by a hydrothermal reaction. In this process, the Fe³⁺ occupying the Li⁺ positions in the powder of the lithium iron phosphate in which the lithium loss occurs are reduced to the Fe²⁺ and the Li⁺ positions are replenished by the Li⁺ again. Optionally, the hydrothermal autoclave 27 can apply a pressure in the range of 1 Mpa - 3 Mpa.

In Step 107, the regenerated lithium iron phosphate is washed and dried. For example, the regenerated lithium iron phosphate that sinks to the bottom of the hydrothermal autoclave 27 after the hydrothermal reaction is transferred to a centrifugal washing device 28, which centrifugally washes the regenerated lithium iron phosphate at least once (for example, three times) at a speed of 8000 rpm for, for example, 8 minutes, in order to remove residual lithium and sulfate groups on the surface of the regenerated lithium iron phosphate. Subsequently, the regenerated lithium iron phosphate is vacuum-dried in a second vacuum drying oven 30 at a temperature of, for example, 80 °C for, for example, 12 hours. The first and second vacuum drying ovens 18, 30 can be the same or different vacuum drying ovens.

In Step 108, the regenerated lithium iron phosphate is calcined, for example, in a furnace 32, under an atmosphere of inert gas or reducing gas, for example, at a temperate of 650 °C - 850 °C for, for example, 2 - 6 hours, preferably 4 - 6 hours, such that the lattice of the lithium iron phosphate is reformed, the Fe³⁺ occupying the Li⁺ positions are further reduced, and the crystal structure of the lithium iron phosphate the is repaired. Thus, the regenerated lithium iron phosphate can be used for a cathode strip of a new power battery. For example, the inert gas is configured as argon, nitrogen or a hydrogen-argon mixture. Optionally, the furnace 32 has a heating rate of 5-10 °C / min. Optionally, the regenerated lithium iron phosphate is naturally cooled after being subjected to the high-temperature calcination.

Optionally, in Step 107a between Step 107 and Step 108, lithium carbonate powder from a fourth dispenser 36 and the regenerated lithium iron phosphate from a fifth dispenser 38 are added into the second mixing vessel 34. The lithium carbonate powder is fully mixed in the regenerated lithium iron phosphate by stirring and optionally grinding. The mass of the lithium carbonate powder is 4 % of the mass of the regenerated lithium iron phosphate. The purpose of adding the lithium carbonate powder is to compensate for the lithium loss that may occur during the high-temperature calcination.

It should be noted that the pure phase lithium iron phosphate is regenerated by the hydrothermal reaction with the help of the lithium source and the sulfurous acid as the reducing agent at a minimum temperature of 90 °C, achieving a recovery rate of up to 92.5 % and significantly improving the economic benefits of recycling the lithium iron phosphate. **In** addition, the lattice of the lithium iron phosphate is further reformed by the high-temperature calcination after the hydrothermal reaction, further reducing the Fe³⁺ occupying the Li⁺ positions and repairing the crystal structure of the lithium iron phosphate.

Optionally, the spent lithium iron phosphate batteries are disassembled after being fully discharged so as to obtain the cathode strip. Before the cathode strip is immersed in the deionized water, residual electrolyte on the spent cathode strip is cleaned by using an organic solvent such as dimethyl carbonate in Step 100.

As shown in FIG. 2, the present application provides a direct recycling system configured to implement the direct recycling method. As can been seen from the above, the direct recycling system generally comprises:
the vessel 10 configured to contain the deionized water;
the clamping fixture 12 configured to clamp the cathode strip such that the cathode strip is maintained at the predetermined immersion depth in the deionized water contained in the vessel 10;
the first vacuum drying oven 16 configured to vacuum-dry the separated lithium iron phosphate at a preset temperature (for example, 80 °C);
the grinding device 18 configured to grind the dried and separated lithium iron phosphate into a finer and more uniform state to form powder of the lithium iron phosphate;
the first mixing vessel 20 configured to contain and stir deionized water;
the first dispenser 22 configured to add the lithium source into the first mixing vessel 20 such that the molar concentration of the lithium source in the deionized water is in the range of 0.33 mol/L - 0.46 mol/L;
the second dispenser 24 configured to add the pure sulfurous acid solution to the first mixing vessel 20 such that the volume ratio of the pure sulfurous acid solution to the deionized water is in the range of 21 % to 29.3 %;
the third dispenser 26 configured to add the powder of the lithium iron phosphate into the first mixing vessel 20 such that the liquid-to-solid ratio of the mixture solution to the powder of the lithium iron phosphate is in the range of 35 mL/g - 40 mL/g;
the hydrothermal autoclave 27 configured to contain and heat the suspension to 90 °C - 140 °C, such as one of 90 °C - 130 °C, 90 °C - 120 °C, 90 °C - 110 °C, 90 °C - 100 °C and about 90 °C, for 4 - 8 hours, such as one of 4-7 hours, 4 - 6 hours and about 6 hours;
the centrifugal washing device 28 configured to centrifugally wash the powder of the lithium iron phosphate;
the second vacuum drying oven 30 configured to vacuum-dry the regenerated lithium iron phosphate at a preset temperature (for example, 80 °C); and
the furnace 32 configured to calcine the regenerated lithium iron phosphate at a high temperature of 650 °C - 850 °C for, for example, 2 - 6 hours.

Optionally, the clamping fixture 12 can be vibrated. Alternatively, the direct recycling system further comprises the additional stripping tool configured to strip the coating from the current collector.

Optionally, the first mixing vessel 20 can be heated and/or kept warm.

Optionally, the direct recycling system further comprises the pH measuring instrument.

Although in FIG. 2, the various devices of the direct recycling system are indicated to be connected by straight lines, it is understood that when liquid (for example, the mixture solution, and the suspension) is transferred between two or more devices of the various devices, the two or more devices can be bidirectionally or unidirectionally fluidly connected via a pipeline and a valve disposed on the pipeline, and when solids are transferred between two or more devices of the various devices, the two or more devices can transfer solids via a special transfer device. Additionally, the used deionized water can be recycled after being filtered and purified via pipelines 33a, 33b, 33c, and 33d in the direct recycling system of the present application.

Hereinafter, the embodiments of the present application will be further understood through experiments.

### Experiment 1

A cathode sheet from a spent lithium iron phosphate battery was cut into a size of 3 cm × 7 cm and immersed in heated water at a temperature of 95 °C for 10 seconds, and then lithium iron phosphate active material (i.e., a lithium iron phosphate coating) on a current collector of the cathode sheet was manually separated, and then the separated lithium iron phosphate was collected, dried and ground to obtain powder of the lithium iron phosphate. A mixture solution was prepared by dissolving 0.2395 g of lithium hydroxide and 6.3 mL of sulfurous acid in 30 mL of deionized water under constant stirring at 300 rpm for 10 minutes. Subsequently, 1.000 g of the powder of the lithium iron phosphate was added to the mixture solution, followed by an additional 10-minute stirring at 300 rpm, to form a suspension. The suspension was then transferred into a 50 mL hydrothermal autoclave and subjected to a hydrothermal reaction at 90 °C for 6 hours, to regenerate the lithium iron phosphate in the suspension. The regenerated lithium iron phosphate was uniformly mixed with 4 wt% of lithium carbonate powder, followed by calcination at 650°C under a flowing argon atmosphere. The thermal treatment was performed with a heating rate of 5 °C/min and a holding time of 3 hours. After the regenerated lithium iron phosphate is cooled after the calcination, it was washed and dried.

### Experiment 2

The difference between Experiment 2 and Experiment 1 is:
The mixture solution was prepared by dissolving 0. 3338 g of lithium hydroxide and 8.8 mL of sulfurous acid in 30 mL of deionized water under constant stirring at 300 rpm for 10 minutes. Subsequently, 1.000 g of the powder of the lithium iron phosphate was added to the mixture solution, followed by an additional 10-minute stirring at 300 rpm, to form a suspension. The suspension was then transferred into a 50 mL hydrothermal autoclave.

The performances of the regenerated lithium iron phosphate obtained through Experiment 1 and Experiment 2 were tested and analyzed.

A cathode sheet (i.e., as a positive electrode) was prepared by mixing and thoroughly grinding the regenerated lithium iron phosphate as lithium iron phosphate active material, PVDF as a binder, and conductive carbon black (Super P) as a conductive agent in a weight ratio of 8:1:1, followed by the addition of N-methyl-2-pyrrolidone (NMP) as a solvent, to form a mixture. The mixture was stirred by magnetic force until a homogeneous slurry without obvious particles was obtained. The aluminum foil was then uniformly coated by the slurry with a controlled thickness of 150 µm and then vacuum-dried at a temperature of 120 °C for 12 hours. Finally, the dried aluminum foil was cut into individual cathode sheets, and their mass was recorded for further analysis.

A half-cell in the from of a coin cell was assembled in a glovebox using the prepared cathode sheets, a lithium metal sheet (i.e., as a counter electrode or a negative electrode), a Celgard separator, a spring, and a washer. The half-cell was electrochemical tested by using a power battery test system with a voltage window of 2.5-3.7 V.

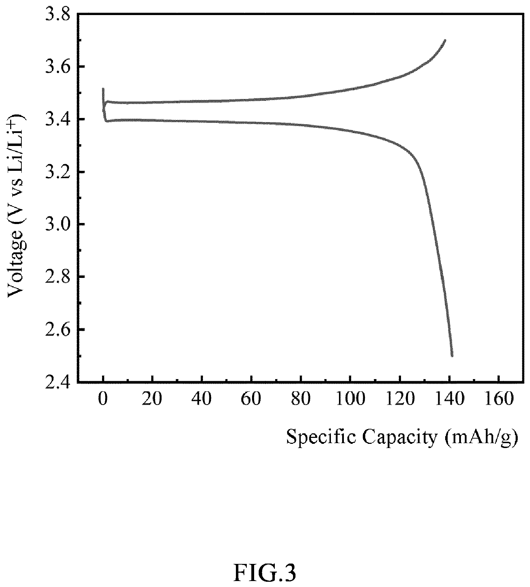

FIG. 3 shows a graph to illustrate an electrochemical performance of the half-cell containing the regenerated lithium iron phosphate prepared by Experiment 1, in which the specific capacity was presented by the horizontal axis and the voltage was presented by the vertical axis. The half-cell exhibited the first-cycle charge specific capacity of 138.2 mAh/g and discharge specific capacity of 141.1 mAh/g at a current density of 0.05 C and ambient temperature of 25°C, demonstrating the favorable initial electrochemical performance. In comparison, a spent lithium iron phosphate battery operated under the same conditions exhibited the first-cycle charge specific capacity of 112.3 mAh/g and discharge specific capacity of 108.5mAh/g. As can be seen, the regenerated lithium iron phosphate prepared by Experiment 1 exhibited significantly enhanced electrochemical performance, confirming successful restoration of spent lithium iron phosphate active material.

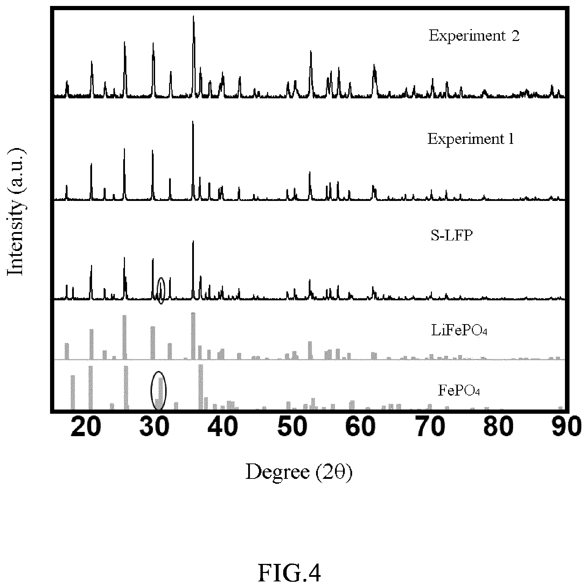

FIG. 4 shows XRD (X-ray diffraction) patterns of the regenerated lithium iron phosphate through Experiments 1 and 2 and the spent lithium iron phosphate active material (S-LFP) along with PDF cards of LiFePO₄ phase and FePO₄ phase. As can be seen in FIG. 4, the XRD pattern of S-LFP exhibits diffraction peaks of the FePO₄ phase (circled by ellipses in FIG. 4), indicating a certain amount of lithium loss, whereas the XRD patterns of the regenerated lithium iron phosphate through Experiments 1 and 2 show no diffraction peaks of the FePO₄ phase and their diffraction peaks are highly overlapped with the diffraction peak of the LiFePO₄ phase, indicating that the regenerated lithium iron phosphate through Experiments 1 and 2 exist in pure LiFePO₄ phase. This proves that the present application can effectively make up for the lithium loss of the spent lithium iron phosphate active material.

In summary, in the direct recycling method of the present application, the lithium iron phosphate active material of the cathode strip is obtained from the spent lithium iron phosphate battery by heated water immersion and separation, the sulfurous acid is used as the reducing agent, and the lithium hydroxide is used as the lithium source to supplement the lithium loss of the spent lithium iron phosphate active material through the hydrothermal reaction, and the crystal structure of the lithium iron phosphate active material is further repaired by using the high-temperature calcination.

Compared with the traditional pyrometallurgical method and the hydrometallurgical method, the direct recycling method of the present invention does not require long-term high-temperature reaction and the use of a large amount of acid and alkali reagents, and is a low-cost, low-energy green recovery method.

The direct recycling method of the present application utilizes the heated water immersion to separate the spent lithium iron phosphate active material from the aluminum current collector. This significantly reduces costs compared to organic solvent-based separation processes while eliminating waste liquid generation.

The direct recycling method of the present application utilizes the lithium hydroxide as the lithium source and the sulfurous acid as the reducing agent to reduce the Fe³⁺ occupying the Li⁺ positions in the spent lithium iron phosphate active material to the Fe²⁺, such that the Fe²⁺ migrate back to their original positions, while the replenished Li⁺ migrate to the lithium vacancies. It is not necessary to predetermine a lithium loss in the lithium iron phosphate separated from the cathode strip of the spent battery in the direct recycling method worked by the hydrothermal reaction, compared with the direct recycling method worked by solid phase reaction, and a more uniform lithium replenishment process is created in a reaction environment formed by the deionized water. More importantly, the pure phase lithium iron phosphate is obtained by the direct recycling method in the present application by using the lithium source and using the sulfurous acid as a reducing agent at a minimum temperature of 90 °C, achieving a recovery rate of up to 92.5 % and hence significantly improving the economic benefits of recycling the lithium iron phosphate. Additionally, the lattice of the lithium iron phosphate is reformed by the high-temperature calcination following the hydrothermal reaction, reducing the Fe³⁺ that occupy lithium vacancies and repairing the crystal structure of the lithium iron phosphate.

The present application further provides a power battery (i.e., a lithium iron phosphate battery) for a vehicle, the power battery comprising a battery cathode bar comprising the lithium iron phosphate prepared by the above-mentioned direct recycling method.

The present application further provides a vehicle comprising such a power battery.

## Claims

1. A direct recycling method for lithium iron phosphate, comprising:
immersing a cathode strip of a spent battery into deionized water, the cathode strip comprising a current collector and a coating bonded to the current collector, the coating comprising lithium iron phosphate;
mechanically separating the lithium iron phosphate in the coating from the current collector;
drying and grinding the separated lithium iron phosphate to obtain powder of the lithium iron phosphate;
stirring deionized water with a lithium source and a pure sulfurous acid solution to form a mixture solution, molar concentration of the lithium source in the deionized water being 0.33 mol/L - 0.46 mol/L and volume ratio of the pure sulfurous acid solution to the deionized water being 21 % - 29.3 %;
stirring the mixture solution added with the powder of the lithium iron phosphate to form a suspension, wherein liquid-to-solid ratio of the mixture solution to the powder of the lithium iron phosphate is 35 mL/g - 40 mL/g;
heating the suspension to 90 °C - 140 °C for 4 - 8 hours to allow the lithium iron phosphate in the suspension to be regenerated by a hydrothermal reaction;
washing and drying the regenerated lithium iron phosphate; and
calcining the regenerated lithium iron phosphate under an atmosphere of inert gas.

2. The direct recycling method of claim 1, wherein the suspension is heated to one of 90 °C - 130 °C, 90 °C - 120 °C, 90 °C - 110 °C, 90 °C - 100 °C for 4 - 8 hours, preferably 4 - 6 hours, to allow the lithium iron phosphate in the suspension to be regenerated by the hydrothermal reaction.

3. The direct recycling method of claim 1, wherein the regenerated lithium iron phosphate is calcined at a temperature of 650 °C - 850 °C for 2 - 6 hours under the atmosphere of inert gas.

4. The direct recycling method of any one of claims 1 to 3, wherein the direct recycling method further comprises stirring the regenerated lithium iron phosphate added with lithium carbonate powder to fully mixed them after washing and drying the regenerated lithium iron phosphate and before calcining the regenerated lithium iron phosphate under the atmosphere of inert gas, a mass of the lithium carbonate powder being 4 % of a mass of the regenerated lithium iron phosphate.

5. The direct recycling method of any one of claims 1 to 3, wherein the direct recycling method further comprises immersing the cathode strip into the deionized water at a temperature of 95 °C - 99 °C for 10 - 60 seconds, preferably 10 - 20 seconds.

6. The direct recycling method of any one of claims 1 to 3, wherein the lithium source is lithium hydroxide, and a mass ratio of lithium hydroxide to the pure sulfurous acid solution is 1:6.5 - 1:7.5.

7. The direct recycling method of any one of claims 1 to 3, further comprising at least one of the following features:
drying the separated lithium iron phosphate under vacuum at a temperature of 80 °C for 12 hours and then grinding the separated lithium iron phosphate to obtain powder of the lithium iron phosphate;
washing the regenerated lithium iron phosphate at least once with the deionized water at a speed of 8000 rpm for 8 minutes and then drying the regenerated lithium iron phosphate at a temperature of 80 °C for 12 hours;
stirring the mixture solution for 5-10 minutes and maintain a pH value of the mixture solution at 6-8; and
stirring the suspension at a speed of 100 rpm for 5-10 minutes.

8. A power battery for a vehicle, the power battery comprising a cathode strip comprising lithium iron phosphate prepared by the direct recycling method of any one of claims 1 to 7.

9. A vehicle comprising a power battery of claim 8.

## Patentansprüche

1. Direktrecyclingverfahren für Lithiumeisenphosphat, umfassend:
Eintauchen eines Kathodenstreifens einer Altbatterie in entionisiertes Wasser, wobei der Kathodenstreifen einen Stromabnehmer und eine an den Stromabnehmer gebundene Beschichtung umfasst, wobei die Beschichtung Lithiumeisenphosphat umfasst;
mechanisches Abtrennen des Lithiumeisenphosphats in der Beschichtung von dem Stromabnehmer;
Trocknen und Mahlen des abgetrennten Lithiumeisenphosphats, um Pulver des Lithiumeisenphosphats zu erhalten;
Rühren von entionisiertem Wasser mit einer Lithiumquelle und einer reinen Schweflige-Säure-Lösung, um eine Mischlösung zu bilden, wobei die molare Konzentration der Lithiumquelle in dem entionisierten Wasser 0,33 mol/l - 0,46 mol/l beträgt und das Volumenverhältnis der reinen Schweflige-Säure-Lösung zu dem entionisierten Wasser 21 % - 29,3 % beträgt;
Rühren der mit dem Pulver des Lithiumeisenphosphats versetzten Mischlösung, um eine Suspension zu bilden, wobei das Flüssigkeit-zu-Feststoff-Verhältnis der Mischlösung zu dem Pulver des Lithiumeisenphosphats 35 ml/g - 40 ml/g beträgt;
Erhitzen der Suspension auf 90 °C - 140 °C für 4 - 8 Stunden, um Regenerieren des Lithiumeisenphosphats in der Suspension durch eine hydrothermische Reaktion zu ermöglichen;
Waschen und Trocknen des regenerierten Lithiumeisenphosphats; und
Kalzinieren des regenerierten Lithiumeisenphosphats unter einer Inertgasatmosphäre.

2. Direktrecyclingverfahren nach Anspruch 1, wobei die Suspension auf eines von 90 °C - 130 °C, 90 °C - 120 °C, 90 °C - 110 °C, 90 °C - 100 °C für 4 - 8 Stunden, vorzugsweise 4 - 6 Stunden, erhitzt wird, um Regenerieren des Lithiumeisenphosphats in der Suspension durch die hydrothermische Reaktion zu ermöglichen.

3. Direktrecyclingverfahren nach Anspruch 1, wobei das regenerierte Lithiumeisenphosphat bei einer Temperatur von 650 °C - 850 °C für 2 - 6 Stunden unter der Atmosphäre von Inertgas kalziniert wird.

4. Direktrecyclingverfahren nach einem der Ansprüche 1 bis 3, wobei das Direktrecyclingverfahren ferner Rühren des mit Lithiumcarbonatpulver versetzten regenerierten Lithiumeisenphosphats umfasst, um sie nach Waschen und Trocknen des regenerierten Lithiumeisenphosphats und vor Calcinieren des regenerierten Lithiumeisenphosphats unter der Atmosphäre von Inertgas vollständig zu vermischen, wobei eine Masse des Lithiumcarbonatpulvers 4 % einer Masse des regenerierten Lithiumeisenphosphats beträgt.

5. Direktrecyclingverfahren nach einem der Ansprüche 1 bis 3, wobei das Direktrecyclingverfahren ferner Eintauchen des Kathodenstreifens in das entionisierte Wasser bei einer Temperatur von 95 °C - 99 C °für 10 - 60 Sekunden, vorzugsweise 10 - 20 Sekunden, umfasst.

6. Direktrecyclingverfahren nach einem der Ansprüche 1 bis 3, wobei die Lithiumquelle Lithiumhydroxid ist und ein Massenverhältnis von Lithiumhydroxid zu der reinen Schweflige-Säure-Lösung 1:6,5 - 1:7,5 beträgt.

7. Direktrecyclingverfahren nach einem der Ansprüche 1 bis 3, ferner umfassend wenigstens einen der folgenden Schritte:
Trocknen des abgetrennten Lithiumeisenphosphats unter Vakuum bei einer Temperatur von 80 °C für 12 Stunden und anschließend Mahlen des abgetrennten Lithiumeisenphosphats, um Pulver des Lithiumeisenphosphats zu erhalten;
Waschen des regenerierten Lithiumeisenphosphats wenigstens einmal mit dem entionisierten Wasser bei einer Drehzahl von 8000 U/min für 8 Minuten und anschließend Trocknen des regenerierten Lithiumeisenphosphats bei einer Temperatur von 80 °C für 12 Stunden;
Rühren der Mischlösung für 5-10 Minuten und Halten eines pH-Werts der Mischlösung bei 6-8; und
Rühren der Suspension für 5-10 Minuten bei einer Drehzahl von 100 U/min.

8. Leistungsbatterie für ein Fahrzeug, wobei die Leistungsbatterie einen Kathodenstreifen umfasst, der durch das Direktrecyclingverfahren nach einem der Ansprüche 1 bis 7 hergestelltes Lithiumeisenphosphat umfasst.

9. Fahrzeug umfassend eine Leistungsbatterie nach Anspruch 8.

## Revendications

1. Procédé de recyclage direct de phosphate de lithium de fer comprenant :
immersion d'une bande de cathode d'une batterie usagée dans de l'eau désionisée, la bande de cathode comprenant un collecteur de courant et un revêtement lié au collecteur de courant, le revêtement comprenant du phosphate de lithium de fer ;
séparation mécanique du phosphate de lithium de fer dans le revêtement du collecteur de courant ;
séchage et broyage du phosphate de lithium de fer séparé pour obtenir la poudre du phosphate de lithium de fer ;
agitation d'eau désionisée avec une source de lithium et une solution d'acide sulfureux pur pour former une solution de mélange, la concentration molaire de la source de lithium dans l'eau désionisée étant de 0,33 mol/L à 0,46 mol/L et le rapport volumique de la solution d'acide sulfureux pure sur l'eau désionisée étant de 21 % à 29,3 % ;
agitation de la solution de mélange additionnée de la poudre du phosphate de lithium de fer pour former une suspension, un rapport liquide sur solide de la solution de mélange sur la poudre du phosphate de lithium de fer étant de 35 mL/g à 40 mL/g ;
chauffage de la suspension jusqu'à 90 °C - 140 °C pendant 4 - 8 heures pour permettre la régénération du phosphate de lithium de fer dans la suspension par une réaction hydrothermique ;
lavage et séchage du phosphate de lithium de fer régénéré ; et
calcination du phosphate de lithium de fer régénéré sous atmosphère de gaz inerte.

2. Procédé de recyclage direct selon la revendication 1, dans lequel la suspension est chauffée jusqu'à une température parmi 90 °C à 130 °C, 90 °C à 120 °C, 90 °C à 110 °C, 90 °C à 100 °C pendant 4 à 8 heures, de préférence 4 à 6 heures, pour permettre la régénération du phosphate de lithium de fer dans la suspension par la réaction hydrothermique.

3. Procédé de recyclage direct selon la revendication 1, dans lequel le phosphate de lithium de fer régénéré est calciné à une température de 650 °C à 850 °C pendant 2 à 6 heures sous l'atmosphère de gaz inerte.

4. Procédé de recyclage direct selon l'une quelconque des revendications 1 à 3, dans lequel le procédé de recyclage direct comprend en outre l'agitation du phosphate de lithium de fer régénéré additionné d'une poudre de carbonate de lithium pour les mélanger complètement après lavage et séchage du phosphate de lithium de fer régénéré et avant calcination du phosphate de lithium de fer régénéré sous l'atmosphère de gaz inerte, une masse de la poudre de carbonate de lithium étant de 4 % de la masse du phosphate de lithium de fer régénéré.

5. Procédé de recyclage direct selon l'une quelconque des revendications 1 à 3, dans lequel le procédé de recyclage direct comprend en outre l'immersion de la bande de cathode dans l'eau désionisée à une température de 95 °C à 99 °C pendant 10 à 60 secondes, de préférence 10 à 20 secondes.

6. Procédé de recyclage direct selon l'une quelconque des revendications 1 à 3, dans lequel la source de lithium est l'hydroxyde de lithium, et un rapport en masse d'hydroxyde de lithium sur la solution d'acide sulfureux pur est 1:6,5 - 1:7,5.

7. Procédé de recyclage direct selon l'une quelconque des revendications 1 à 3, comprenant en outre au moins une des caractéristiques suivantes :
séchage du phosphate de lithium de fer séparé, sous vide, à une température de 80 °C pendant 12 heures et ensuite broyage du phosphate de lithium de fer séparé pour obtenir la poudre du phosphate de lithium de fer ;
lavage au moins une fois du phosphate de lithium de fer régénéré avec l'eau désionisée à une vitesse de 8 000 tpm pendant 8 minutes puis séchage du phosphate de lithium de fer régénéré à une température de 80 °C pendant 12 heures ;
agitation de la solution de mélange pendant 5-10 minutes et maintien d'une valeur de pH de la solution de mélange à 6-8 ; et
agitation de la suspension à une vitesse de 100 tpm pendant 5-10 minutes.

8. Batterie de puissance pour un véhicule, la batterie de puissance comprenant une bande de cathode comprenant du phosphate de lithium de fer préparé par le procédé de recyclage direct selon l'une quelconque des revendications 1 à 7.

9. Véhicule comprenant une batterie de puissance selon la revendication 8.
